# EUROPEAN PATENT APPLICATION

(11) **EP 1 569 171 A1**
(43) Date of publication of application: **31.08.2005**
(21) Application number: 03748670.1
(22) Date of filing: 02.10.2003
(51) Int. Cl.: G06T 15/50, G06T 17/40, A63F 13/00

(54) **IMAGE PROCESSING DEVICE, IMAGE PROCESSING METHOD, PROGRAM AND INFORMATION STORING MEDIUM**

(30) Priority: 06.12.2002 JP 2002355883
(71) Applicant: Konami Corporation, Tokyo 100-6330 (JP)
(72) Inventor: Chosokabe, Akiyoshi c/o Konami Corporation, Chiyoda-ku, Tokyo 100-6330 (JP)
(74) Representative: Winter, Brandl,&Fürniss, Hübner Röss, Kaiser, Polte Partnerschaft Patent- und Rechtsanwaltskanzlei
(86) International application number: PCT/JP2003/012635
(87) International publication number: WO 2004/053800

(57) **Abstract**

There is provided an image processing device including a light source position acquisition unit (62) for acquiring the position of a light source, a viewpoint position and viewing direction acquisition unit (64) for acquiring a viewpoint position and a viewing direction, a highlight position calculation unit (66) for calculating the position of a highlight appearing on the surface of an object based on the viewpoint position, a highlight intensity calculation unit (68) for calculating intensity of the highlight based on the light source position and the viewing direction, and a semitransparent composition unit (70) for performing semitransparent composition of an image representing the highlight onto the image representing the object based on the position calculated by the highlight position calculation unit and the semitransparent composition rate corresponding to the intensity calculated by the highlight intensity calculation unit.

## Description

### TECHNICAL FIELD

The present invention relates to an image processing device, an image processing method, program and an information storage medium. The present invention more particularly relates to a technique for expressing a highlight with a relatively light processing load.

### BACKGROUND ART

In the field of three-dimensional image processing, the Phong model method is known as a simple highlight (specular reflection) expression method. The Phong model can achieve simple expression of specular reflection compared with methods employing strict physical laws.

For real-time three dimensional image processing, however, even the Phong model is associated with a heavy processing load, and therefore a more simplified method of expressing specular reflection is desired.

The present invention has been conceived in view of the above-described problem, and an object thereof is to provide an image processing device, an image processing method, program and an information storage medium, capable of expressing a highlight with a relatively light processing load.

### DISCLOSURE OF THE INVENTION

In order to solve the above-described problem, an image processing device according to one aspect of the present invention is an image processing device for displaying an image representing an object arranged in a virtual three-dimensional space comprising light source position acquisition means for acquiring a light source position set in the virtual three-dimensional space, viewpoint position and viewing direction acquisition means for acquiring a viewpoint position and a viewing direction set in the virtual three-dimensional space, highlight position calculation means for calculating a position of a highlight appearing on a surface of the object based on the viewpoint position, highlight intensity calculation means for calculating intensity of the highlight based on the light source position and the viewing direction, semitransparent composition means for performing semitransparent composition of the image representing the highlight onto the image representing the object based on the position calculated by the highlight position calculation means and a semitransparent composition rate corresponding to the intensity calculated by the highlight intensity calculation means, and image display means for displaying an image obtained by performing semitransparent composition of the image representing the highlight onto the image representing the object by the semitransparent composition means.

An image processing method according to another aspect of the present invention is an image processing method for displaying an image representing an object arranged in a virtual three-dimensional space comprising a light source position acquisition step for acquiring a light source position set in the virtual three-dimensional space, a viewpoint position and viewing direction acquisition step for acquiring a viewpoint position and a viewing direction set in the virtual three-dimensional space, a highlight position calculation step for calculating a position of a highlight appearing on a surface of the object based on the viewpoint position, a highlight intensity calculation step for calculating intensity of the highlight based on the light source position and the viewing direction, a semitransparent composition step for performing semitransparent composition of the image representing the highlight onto the image representing the object based on the position calculated at the highlight position calculation step and a semitransparent composition rate corresponding to the intensity calculated at the highlight intensity calculation step, and an image display step for displaying an image obtained by performing semitransparent composition of the image representing the highlight onto the image representing the object at the semitransparent composition step.

A program according to still another aspect of the present invention is a program for causing a computer in, for example, a household game machine, an arcade game machine, a portable game machine, a personal computer, a personal digital assistant, or a mobile phone, to function as light source position acquisition means for acquiring a light source position set in a virtual three-dimensional space, viewpoint position and viewing direction acquisition means for acquiring a viewpoint position and a viewing direction set in the virtual three-dimensional space, highlight position calculation means for calculating a position of a highlight appearing on a surface of an object arranged in the virtual three-dimensional space based on the viewpoint position, highlight intensity calculation means for calculating intensity of the highlight based on the light source position and the viewing direction, semitransparent composition means for performing semitransparent composition of the image representing the highlight onto the image representing the object based on the position calculated by the highlight position calculation means and a semitransparent composition rate corresponding to the intensity calculated by the highlight intensity calculation means, and image display means for displaying an image obtained by performing semitransparent composition of the image representing the highlight onto the image representing the object by the semitransparent composition means. This program may be stored in a variety of computer readable information storage media.

According to the present invention, semitransparent composition of an image representing a highlight onto an image representing an object is performed at a semitransparent composition rate corresponding to the intensity calculated based on the light source position and the viewing direction at the position calculated based on the viewpoint position, thereby making it possible to express a highlight appearing on a surface of the subject with a relatively light processing load.

The highlight position calculation means may calculate the position of the highlight based on the viewpoint position and the viewing direction, so that the highlight can be produced at the position in accordance with the viewing direction.

The highlight position calculation means may calculate the position of the highlight based on the viewpoint position and the light source position, so that the highlight can be produced at the position in accordance with the light source position.

The highlight intensity calculation means may calculate the intensity of the highlight based on the viewing direction and the direction connecting two of the light source position, the viewpoint position, and the highlight position, so that the intensity of the highlight can be varied in accordance with the relation among the light source position, the viewpoint position, the highlight position, and the viewing direction.

### BRIEF DESCRIPTION OF THE DRAWINGS

Fig. 1 is a diagram showing a hardware architecture of an image processing device according to one embodiment of the present invention.
Fig. 2 is a view for describing highlight expression according to one embodiment of the present invention.
Fig. 3 is a view showing a texture image representing a soccer pitch.
Fig. 4 is a view showing a texture image representing a highlight.
Fig. 5 is a view for showing a method of calculating a highlight position.
Fig. 6 is a view for showing another method of calculating a highlight position.
Fig. 7 is a view for showing a method of calculating highlight intensity.
Fig. 8 is a block diagram showing functions of the image processing device according to one embodiment of the present invention.

### BEST MODE FOR CARRYING OUT THE INVENTION

An exemplary embodiment of the present invention will now be described in detail with reference to the drawings.

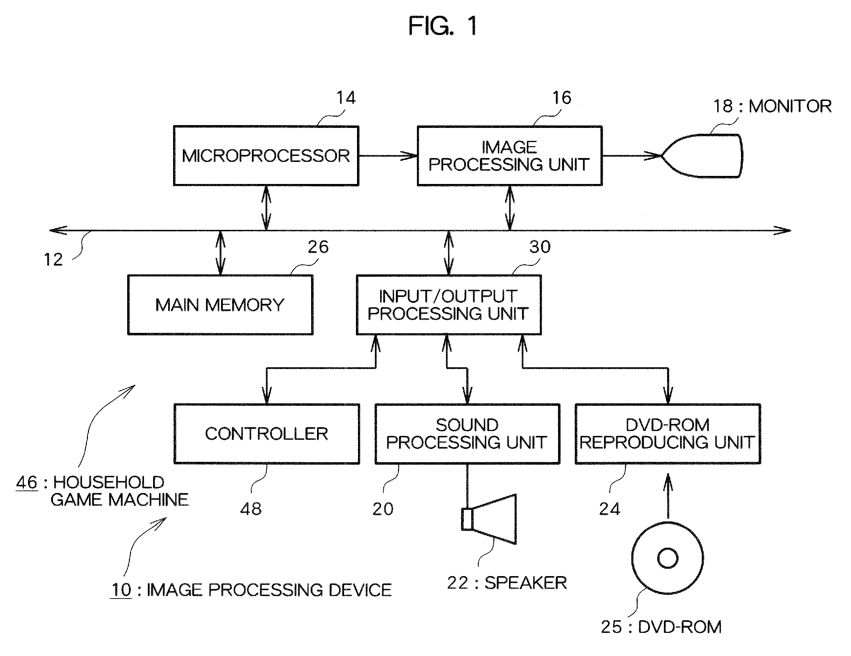

Fig. 1 shows a hardware configuration of an image processing device according to one embodiment of the present invention. As illustrated, the image processing device 10 is a game device composed of a household game machine 46 connected to a monitor 18 and a speaker 22, and a DVD (digital versatile disk) -ROM 25 which is an information storage medium mounted in the machine. While the DVD-ROM 25 is used for supplying a program and data to the household game machine 46 in this embodiment, any other information storage media, such as a CD-ROM (compact disk read only memory) and a ROM (read only memory) card, can be employed. Alternatively, the program and the data can be remotely supplied to the household game machine 46 through a communication network such as the Internet.

The household game machine 46 is a known computer game system including a microprocessor 14, an image processing unit 16, a main memory 26, an input/output processing unit 30, a sound processing unit 20, and a DVD-ROM reproducing unit 24. The microprocessor 14, the image processing unit 16, the main memory 26, and the input/output processing unit 30 are interconnected via a bus 12 for data exchange, and a controller 48, the sound processing unit 20, and the DVD-ROM reproducing unit 24 are connected to the input/output processing unit 30. The components of the household game machine 46 are accommodated in a housing. By way of example, a home TV receiver and a speaker incorporated therein are used as the monitor 18 and the speaker 22, respectively, in this embodiment.

The microprocessor 14 controls respective elements of the household game machine 46 based on the operating system stored in the ROM (not shown) and the game program read from the DVD-ROM 25. The bus 12 is used for exchanging addresses and data among the elements of the household game machine 46. The main memory 26 includes a RAM (random access memory) used for storing the game program and game data read from the DVD-ROM 25 as required, and also used as a workspace for the microprocessor 14. The image processing unit 16 including a VRAM (video RAM) receives image data from the microprocessor 14 to draw a game image in the VRAM, and converts the content into video signals, which are output to the monitor 18.

The input/output processing unit 30 is an interface for relaying data communication between the microprocessor 14 and the controller 48, the sound processing unit 20, or the DVD-ROM reproducing unit 24. The sound processing unit 20 including a sound buffer reproduces data for music, a game effect sound, and so on, which are read from the DVD-ROM 25 and stored in the sound buffer, and outputs sound using the speaker 22. The DVD-ROM reproducing unit 24 reads the game program and the game data stored in the DVD-ROM 25 in accordance with an instruction from the microprocessor 14.

The technique for expressing a highlight on an object surface with a relatively light processing load using the image processing device 10 configured as described above will next be described. In this specification, an embodiment will be described where an image overlooking a soccer pitch is displayed on the monitor 18 and a highlight appearing on part of the soccer pitch due to lighting is expressed thereon. This technique can be used for implementing, for example, a soccer game using the image processing device 10.

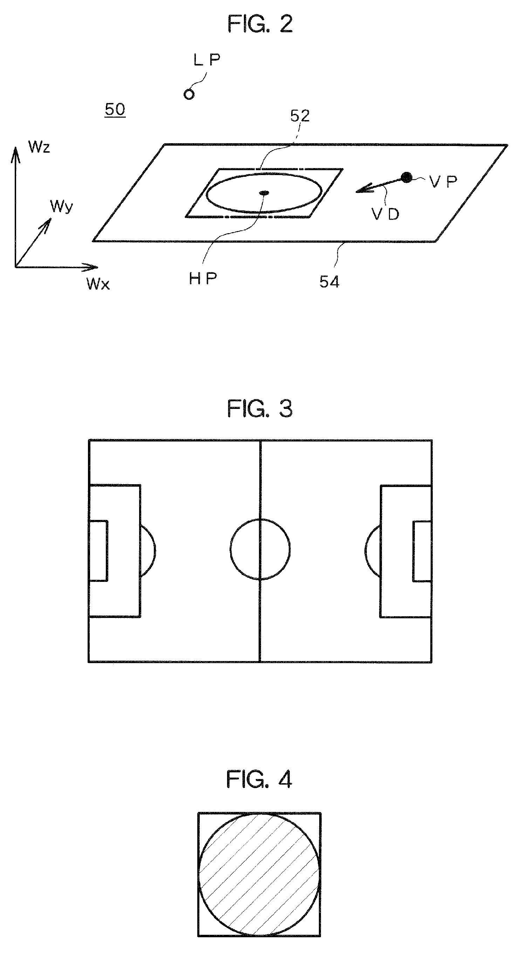

Referring to Fig. 2, with this image processing device 10, a soccer pitch object 54, a highlight object 52, a viewpoint position VP, and a light source position LP are arranged in a virtual three-dimensional space (object space) 50. The soccer pitch object 54 is a flat object representing a soccer pitch, and a texture image shown in Fig. 3 is mapped thereon. The highlight object 52, which is a flat object having a smaller area than the soccer pitch object 54, is used for representing a highlight appearing on the surface of the soccer pitch object 54. The highlight object 52 is arranged at a highlight position HP set on the surface of the soccer pitch object 54 in parallel thereto. The texture image shown in Fig. 4 is mapped thereon. The texture image in Fig. 4 expresses the highlight appearing on the surface of the soccer pitch with a circular image at the center and the peripheral region assigned transparent attributes. The circular image is desirably depicted in a brighter color, such as yellow, than the color of the texture image mapped onto the soccer pitch object 54 (especially the color of the grass) for expressing a highlight. The circular image may include a transparent or semitransparent portion.

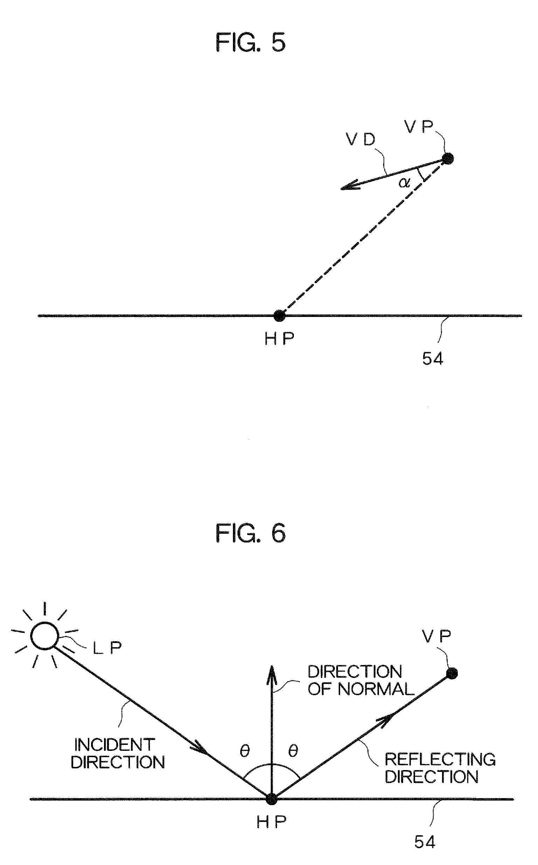

The highlight position HP is calculated based on the viewpoint position VP. For example, referring to Fig. 5, the highlight position HP may be set at a position on the soccer pitch object 54 having a particular relation with the viewpoint position VP. In the example of Fig. 5, the highlight position HP is set at an intersection between the flat soccer pitch object 54 and a line (shown as a broken line in the figure) extending from the viewpoint position VP in a direction which is obtained by shifting the viewing direction VD toward the soccer pitch object 54 at an angle of α degrees.

The highlight position HP may be determined taking into consideration the light source position LP in addition to the viewpoint position VP, as illustrated in Fig. 6. More specifically, as illustrated in Fig. 6, the highlight position HP may be determined on the surface of the soccer pitch object 54 so that the angle (incident angle) between the vector connecting the highlight position HP and the light source position LP and the normal vector to the soccer pitch object 54 is equal to the angle (reflection angle) between the vector connecting the highlight position HP and the viewpoint position VP and the normal vector to the soccer pitch object 54, thereby producing a highlight at a more realistic position.

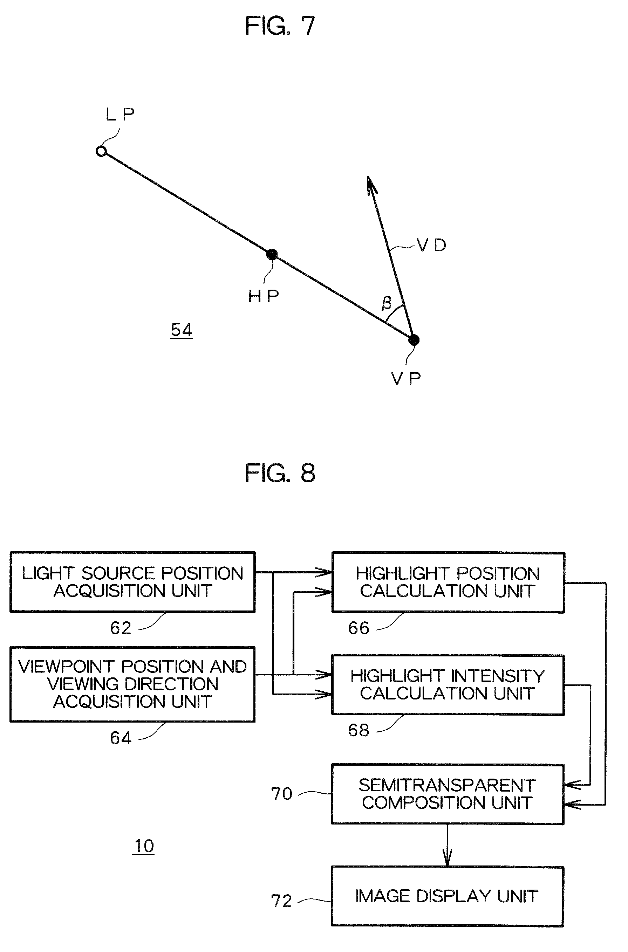

When the texture image expressing a highlight (Fig. 4) is composited in a semitransparent manner onto the texture image expressing the soccer pitch (Fig. 3) as described above, the composite rate is controlled based on the viewing direction VD and the light source position LP. Fig. 7 is a view for describing control of the semitransparent composition rate, overlooking the viewpoint position VP, the viewing direction VD, the highlight position HP, and the light source position LP from above the soccer pitch object 54. In this image processing device 10, the semitransparent composition rate is controlled based on an angle β between the line segment obtained by projecting the line segment between the viewpoint position VP and the light source position LP to the soccer pitch object 54 and the line segment obtained by projecting the viewing direction VD to the soccer pitch object 54. More specifically, the semitransparent composition rate is set at 100% (i.e. opaque) when the angle β is 0 degrees, and 0% (i.e. completely transparent) when the angle is 20 degrees or greater. The semitransparent composition rate is gradually decreased as the angle approaches 20 degrees from 0 degrees. As a result, the highlight image is displayed in the darkest manner when the light source position LP is located in the same direction as the viewing direction VD vertically shifted with respect to the soccer pitch object 54, and displayed in a lighter color as the viewing direction VD deviates therefrom. The semitransparent composition rate may be controlled based on the angle between the viewing direction VD and the vector connecting two of the light source position LP, the highlight position HP, and the viewpoint position VP, or the vector obtained by projecting a vector to the soccer pitch object 54.

Functions of the image processing device 10 will next be described. Of the various functions achieved by the image processing device 10, Fig. 8 shows the relation among the functions relevant to the present invention. As illustrated, the functions achieved by the image processing device 10 include a light source position acquisition unit 62, a viewpoint position and viewing direction acquisition unit 64, a highlight position calculation unit 66, a highlight intensity calculation unit 68, a semitransparent composition unit 70, and an image display unit 72. These functions are performed by the image processing device 10, i.e. a computer, running a program.

The light source position acquisition unit 62 acquires the light source position LP set in the virtual three-dimensional space 50. The light source position LP is prestored in, for example, the DVD-ROM 25 together with the program when the light source is fixed, and calculated in the so-called environment processing when the light source is dynamic. The viewpoint position and viewing direction acquisition unit 64 acquires the viewpoint position VP and the viewing direction VD set in the virtual three-dimensional space 50. The viewpoint position VP and the viewing direction VD are also stored in, for example, the DVD-ROM 25 together with the program when they are fixed, and calculated in the so-called environment processing when they are dynamic.

The highlight position calculation unit 66 calculates the position of the highlight appearing on the surface of the soccer pitch object 54, i.e. the highlight position HP, based on the viewpoint position VP. The highlight position calculation unit 66 may set the highlight position HP based on the viewpoint position VP and the viewing direction VD at, for example, a predetermined position ahead of the visual line, as illustrated in Fig. 5. The highlight position HP may be set based on the viewpoint position VP and the light source position LP at, for example, a position where the incident angle is equal to the reflection angle, as illustrated in Fig. 6.

The highlight intensity calculation unit 68 calculates the highlight intensity based on the light source position LP and the viewing direction VD. The highlight intensity is the semitransparent composition rate used for semitransparent composition of the texture image representing a highlight onto the texture image representing the soccer pitch. For example, the highlight intensity calculation unit 68 calculates the highlight intensity based on the viewing direction VD and the direction connecting two of the light source position LP, the viewpoint position VP, and the highlight position HP.

The semitransparent composition unit 70 performs semitransparent composition of the image representing a highlight (Fig. 4) onto the image representing the soccer pitch object 54 (Fig. 3) based on the highlight position HP calculated by the highlight position calculation unit 66 and the semitransparent composition rate corresponding to the intensity calculated by the highlight intensity calculation unit 68. The image display unit 72 displays the image produced by the semitransparent composition unit 70.

With the image processing device 10 described above, the image produced by performing semitransparent composition of the texture image representing a highlight onto the texture image representing the soccer pitch is displayed on the monitor 18, thereby making it possible to express a highlight with a relatively light processing load.

The present invention is not limited to the above-described embodiment. For example, the present invention is applicable to expression of a highlight appearing on the objects other than the soccer pitch. While the highlight is expressed using the highlight object 52 having the texture image representing a highlight mapped thereon in the above description, the image produced by semitransparent composition of the image representing a highlight (Fig. 4) onto the image representing the field (Fig. 3) may be mapped onto the soccer pitch object 54 as the texture image without using the highlight object. The size of the image representing a highlight may be controlled based on, for example, the height of the viewpoint position VP from the soccer pitch object 54, the distance between the viewpoint position VP and the highlight position HP, the height of the light source position LP from the soccer pitch object 54, or the distance between the light source position LP and the highlight position HP.

### INDUSTRIAL APPLICABILITY

As described above, according to the present invention, by applying to game machine etc., semitransparent composition of a highlight image onto an object image is performed at a semitransparent composition rate corresponding to the intensity calculated based on the light source position and the viewing direction at the position calculated based on the viewpoint position, thereby making it possible to express a highlight appearing on a surface of the subject with a relatively light processing load.

## Claims

1. An image processing device for displaying an image representing an object arranged in a virtual three-dimensional space, comprising:
light source position acquisition means for acquiring a light source position set in said virtual three-dimensional space;
viewpoint position and viewing direction acquisition means for acquiring a viewpoint position and a viewing direction set in said virtual three-dimensional space;
highlight position calculation means for calculating a position of a highlight appearing on a surface of said object based on said viewpoint position;
highlight intensity calculation means for calculating intensity of the highlight based on said light source position and said viewing direction;
semitransparent composition means for performing semitransparent composition of said image representing the highlight onto said image representing said object based on the position calculated by the highlight position calculation means and a semitransparent composition rate corresponding to the intensity calculated by the highlight intensity calculation means; and
image display means for displaying an image obtained by performing semitransparent composition of said image representing the highlight onto said image representing said object by said semitransparent composition means.

2. The image processing device according to claim 1, wherein
said highlight position calculation means calculates the position of the highlight based on said viewpoint position and said viewing direction.

3. The image processing device according to claim 1, wherein
said highlight position calculation means calculates the position of the highlight based on said viewpoint position and said light source position.

4. The image processing device according to any of claims 1-3, wherein
said highlight intensity calculation means calculates the intensity of the highlight based on said viewing direction and the direction connecting two of said light source position, said viewpoint position, and said highlight position.

5. An image processing method for displaying an image representing an object arranged in a virtual three-dimensional space, comprising:
a light source position acquisition step for acquiring a light source position set in said virtual three-dimensional space;
a viewpoint position and viewing direction acquisition step for acquiring a viewpoint position and a viewing direction set in said virtual three-dimensional space;
a highlight position calculation step for calculating a position of a highlight appearing on a surface of said object based on said viewpoint position;
a highlight intensity calculation step for calculating intensity of the highlight based on said light source position and said viewing direction;
a semitransparent composition step for performing semitransparent composition of said image representing the highlight onto said image representing said object based on the position calculated at said highlight position calculation step and a semitransparent composition rate corresponding to the intensity calculated at said highlight intensity calculation step; and
an image display step for displaying an image obtained by performing semitransparent composition of said image representing the highlight onto said image representing said object at said semitransparent composition step.

6. A program for causing a computer to function as:
light source position acquisition means for acquiring a light source position set in a virtual three-dimensional space;
viewpoint position and viewing direction acquisition means for acquiring a viewpoint position and a viewing direction set in said virtual three-dimensional space;
highlight position calculation means for calculating a position of a highlight appearing on a surface of an object arranged in said virtual three-dimensional space based on said viewpoint position;
highlight intensity calculation means for calculating intensity of the highlight based on said light source position and said viewing direction;
semitransparent composition means for performing semitransparent composition of said image representing the highlight onto said image representing said object based on the position calculated by said highlight position calculation means and a semitransparent composition rate corresponding to the intensity calculated by said highlight intensity calculation means; and
image display means for displaying an image obtained by performing semitransparent composition of said image representing the highlight onto said image representing said object by said semitransparent composition means.

7. An information storage medium for storing a program according to claim 6.
